# EUROPEAN PATENT APPLICATION

(11) **EP 4 617 335 A2**
(43) Date of publication of application: **17.09.2025**
(21) Application number: 25193783.5
(22) Date of filing: 01.04.2020
(51) Int. Cl.: C09D 151/08

(54) **STAIN RESISTANT COATING COMPOSITION**

(30) Priority: 02.04.2019 US 201962828045 P
(62) Divisional of application: 20722055.9
(71) Applicant: PPG Industries Ohio, Inc., Cleveland, OH 44111 (US)
(72) Inventor: Hensel, Gereme T., Cleveland, Ohio 44111 (US); Laird, Darin W., Cleveland, Ohio 44111 (US); Olson, Kurt G., Cleveland, Ohio 44111 (US); Schwendeman, John E., Cleveland, Ohio 44111 (US); Swarup, Shanti, Cleveland, Ohio 44111 (US); Velez-Herrera, Pedro, Cleveland, Ohio 44111 (US); Wang, Maria, Cleveland, Ohio 44111 (US); Zheng, Qi, Cleveland, Ohio 44111 (US)
(74) Representative: f & e patent

(57) **Abstract**

A stain resistant coating composition includes: urethane acrylate core-shell particles including (1) a polymeric acrylic core; and (2) a polymeric shell including a urethane linkage. The polymeric shell is formed from a reaction mixture including an isocyanate and a polyol. The polyol is substantially free of a six or more consecutive methylene group chain and/or the polyol is formed from monomers comprising a monomer content including at least 10 wt% substituted polyol and/or substituted polyacid and/or at least 25 wt% polyol or polyacid containing cyclic content, based on the total weight of the monomers forming the polyol.

## Description

### FIELD OF THE INVENTION

The present invention relates to a stain resistant coating composition and a substrate coated therewith.

### BACKGROUND OF THE INVENTION

Substrates coated by a coating composition and coalesced to form a coating thereon commonly become stained as the result of everyday traffic in the area surrounding the coated substrate. A stain resistant coating is desirable.

### SUMMARY OF THE INVENTION

The present invention includes a stain resistant coating composition including: urethane acrylate core-shell particles including (1) a polymeric acrylic core; and (2) a polymeric shell including a urethane linkage. The polymeric shell is formed from a reaction mixture including an isocyanate and a polyol. The polyol is substantially free of a six or more consecutive methylene group chain and/or the polyol is formed from monomers comprising a monomer content including at least 10 wt% substituted polyol and/or substituted polyacid and/or at least 25 wt% polyol or polyacid containing cyclic content, based on the total weight of the monomers forming the polyol.

The present invention also includes a stain resistant coating composition including: urethane acrylate core-shell particles including (1) a polymeric acrylic core; and (2) a polymeric shell including a urethane linkage. The polymeric shell is formed from a reaction mixture including an isocyanate and a polyol. When the coating composition is applied to a substrate and coalesced to form a coating, the coating exhibits a stain rating of at least 45.

The present invention also includes a stain resistant coating composition including: (i) acrylic core-shell particles having a z-average particle size of up to 100 nm; and (ii) non-core-shell acrylic resin particles. The acrylic core-shell particles have a z-average particle size smaller than the non-core-shell acrylic resin particles.

### DESCRIPTION OF THE INVENTION

For the purposes of the following detailed description, it is to be understood that the invention may assume various alternative variations and step sequences, except where expressly specified to the contrary. It is also to be understood that the specific compositions, coated substrates, multilayer coatings, and methods described in the following specification are simply exemplary embodiments of the invention. Moreover, other than in any operating examples, or where otherwise indicated, all numbers expressing, for example, quantities of ingredients used in the specification and claims are to be understood as being modified in all instances by the term "about". Accordingly, unless indicated to the contrary, the numerical parameters set forth in the following specification and attached claims are approximations that may vary depending upon the desired properties to be obtained by the present invention. At the very least, and not as an attempt to limit the application of the doctrine of equivalents to the scope of the claims, each numerical parameter should at least be construed in light of the number of reported significant digits and by applying ordinary rounding techniques.

Notwithstanding that the numerical ranges and parameters setting forth the broad scope of the invention are approximations, the numerical values set forth in the specific examples are reported as precisely as possible. Any numerical value, however, inherently contains certain errors necessarily resulting from the standard deviation found in their respective testing measurements.

Also, it should be understood that any numerical range recited herein is intended to include all sub-ranges subsumed therein. For example, a range of "1 to 10" is intended to include all sub-ranges between (and including) the recited minimum value of 1 and the recited maximum value of 10, that is, having a minimum value equal to or greater than 1 and a maximum value of equal to or less than 10.

In this application, the use of the singular includes the plural and plural encompasses the singular, unless specifically stated otherwise. In addition, in this application, the use of "or" means "and/or" unless specifically stated otherwise, even though "and/or" may be explicitly used in certain instances.

As used herein, the transitional term "comprising" (and other comparable terms, *e.g.,* "containing" and "including") is "open-ended" and open to the inclusion of unspecified matter. Although described in terms of "comprising", the terms "consisting essentially of" and "consisting of" are also within the scope of the invention.

As used herein, the term "dispersion" refers to a two-phase system in which one phase includes finely divided particles (e.g. having diameters of less than 500 nm) distributed throughout a second phase, which is a continuous phase. The dispersions of the present invention often are an organic phase-in-water emulsions, wherein an aqueous medium provides the continuous phase of the dispersion in which the particles are suspended as the organic phase.

As used herein, the term "aqueous", "aqueous phase", "aqueous medium", and the like, refers to a medium that either consists exclusively of water or comprises predominantly water (e.g. at least 50 wt% water) in combination with another material, such as, for example, an inert organic solvent. The amount of organic solvent present in the aqueous dispersions of the present invention may be less than 20 wt%, such as less than 10 wt%, or, in some cases, less than 5 wt%, or, in yet other cases, less than 2 wt%, with the wt%s being based on the total weight of the dispersion. Non-limiting examples of suitable organic solvents are propylene glycol monobutyl ether, ethylene glycol monohexyl ether, ethylene glycol monobutyl ether, n-butanol, benzyl alcohol, and mineral spirits.

The term "polymer", which is used interchangeably with "resin" is meant to encompass oligomers, and includes without limitation both homopolymers and copolymers. By "prepolymer" it is meant a polymer produced as an intermediate stage that is further reacted before polymerization is complete.

The term "coalesced" refers to the process by which a coating composition hardens to form a coating. Coalescing may include the coating composition being cured (e.g. hardening by being crosslinked, either by itself or via a crosslinking agent) or the coating composition being dried.

The coating composition of the present invention, when applied to a substrate and coalesced to form a coating, results in a coating exhibiting good stain resistance and/or dirt pickup resistance. Stain resistance of a coating refers to the ability of the coalesced coating to resist stain (that includes at least one of: difficulty of being wetted by stain, difficulty of being adhered to by stain, and/or easiness of stain removal (that is, if a coalesced coating does experience discoloration, the ability to restore the original color or to lighten the stain). Stain resistance is measured according to the Stain Resistance Test Method as hereinafter described. Dirt pickup resistance of a coating refers to the ability of the coating to resist change in appearance when in an outdoor environment. Dirt pickup resistance is measured according to the Dirt Pickup Resistance Test Method as hereinafter described. The coating composition of the present invention when applied to a substrate and coalesced to form a coating exhibits good stain resistance (as described further herein) and/or good dirt pickup resistance (as described further herein).

The coating composition of the present invention includes: urethane acrylate core-shell particles comprising (1) a polymeric acrylic core; and (2) a polymeric shell comprising a urethane linkage, wherein the polymeric shell is formed from a reaction mixture comprising an isocyanate and a polyol, wherein: (a) the polyol is substantially free of a six or more consecutive methylene group chain; and/or (b) the polyol is formed from monomers comprising a monomer content including at least 10 wt% substituted polyol and/or substituted polyacid and/or at least 25 wt% polyol or polyacid containing cyclic content, based on the total weight of the monomers forming the polyol.

The urethane acrylate core-shell particles may be produced as an aqueous dispersion. A core-shell particle includes (i) at least a first material or materials that form the center of the particle (i.e., the core) and (ii) at least a second material or materials (i.e., the shell) that form a layer over and at least partially encapsulate at least a portion of the surface of the first material(s) (i.e., the core). It is appreciated that the first material(s) that forms the core is different from the second material(s) that forms the shell. Further, the core-shell particles can have various shapes (or morphologies) and sizes. For example, the core-shell particles can have generally spherical, cubic, platy, polyhedral, or acicular (elongated or fibrous) morphologies.

The urethane acrylate core-shell particle may include a polymeric acrylic core formed from a reaction including at least one acrylic monomer (e.g., an ethylenically unsaturated monomer). The polymeric acrylic core may be at least partially encapsulated by the polymeric shell to form the core-shell structure. The polymeric shell may include at least one urethane linkage. The polymeric acrylic core may be covalently bonded to the polymeric shell. For example, the polymeric shell can be covalently bonded to the polymeric acrylic core by reacting at least one functional group on the monomers and/or prepolymers that are used to form the polymeric shell with at least one functional group on the monomers and/or prepolymers that are used to form the polymeric acrylic core. The polymeric acrylic core may be bonded to the polymeric shell by an acrylate linkage from the shell to the core.

The polymeric acrylic core may be prepared from polymerizable ethylenically unsaturated monomers. Suitable polymerizable ethylenically unsaturated monomers may include ethylenically unsaturated hydrocarbons, esters and ethers, such as esters of acrylic and methacrylic acids, and esters of vinyl alcohol and styrene. Specific examples include butadiene, isoprene, styrene, substituted styrenes, the lower alkyl (C₁-C₆) esters of acrylic, methacrylic and maleic acids such as butyl methacrylate (BMA), vinyl acetate and butyrate, acrylonitrile, vinylmethyl, propyl and butyl ethers, vinyl chloride, vinylidene chloride, and the like. Other suitable polyethylenically unsaturated monomers include allylmethacrylate, diacrylate esters of C₁-C₆ diols such as butanediol diacrylate and hexanediol diacrylate, divinyl benzene, divinyl ether, divinyl sulfide, trimethylolpropane triacrylate, and the like.

The polymeric shell may comprise urea linkages and/or urethane linkages and may optionally further comprise other linkages. For instance, the polymeric shell can comprise a polyurethane with a backbone that includes urethane linkages and urea linkages. As indicated, the polymeric shell can also comprise additional linkages including, but not limited to, ester linkages, ether linkages, and combinations thereof.

The polymeric shell may have a weight average molecular weight Mw of at least 5,000, such as at least 8,000, at least 10,000, at least 15,000, at least 20,000, at least 30,000, at least 40,000, at least 50,000, at least 60,000, at least 70,000, or at least 80,000. The polymeric shell may have a Mw of up to 100,000, such as up to 90,000, up to 80,000, up to 70,000, up to 60,000, up to 50,000, up to 40,000, up to 30,000, up to 20,000, or up to 10,000. The polymeric shell may have a Mw of from 5,000-100,000, such as from 5,000-90,000, 5,000-85,000, 5,000-80,000, 8,000-100,000, 8,000-90,000, 8,000-85,000, 8,000-80,000, 10,000-100,000, 10,000-90,000, 10,000-85,000, or 10,000-80,000. The polymeric shell may have a Mw of from 5,000-50,000, such as from 5,000-40,000, 5,000-30,000, 5,000-20,000, 5,000-15,000, 5,000-10,000, 8,000-50,000, 8,000-40,000, 8,000-30,000, 8,000-20,000, 8,000-15,000, or 8,000-10,000. The polymeric shell may have a Mw of from 50,000-100,000, such as from 60,000-100,000, 70,000-100,000, 80,000-100,000, 60,000-90,000, 70,000-90,000, or 80,000-90,000. Mw is measured by gel permeation chromatography using a polystyrene standard according to ASTM D6579-11 (performed using a Waters 2695 separation module with a Waters 2414 differential refractometer (RI detector); tetrahydrofuran (THF) was used as the eluent at a flow rate of 1 ml/min, and two PLgel Mixed-C (300×7.5 mm) columns were used for separation at the room temperature; weight and number average molecular weight of polymeric samples can be measured by gel permeation chromatography relative to linear polystyrene standards of 800 to 900,000 Da).

The polymeric shell may be formed from a reaction mixture comprising an isocyanate and a polyol.

The isocyanate may include a polyisocyanate and may be aliphatic or aromatic; diisocyanates or higher polyisocyanates such as isocyanurates of diisocyanates may be used. Suitable isocyanates include, but are not limited to diphenylmethane diisocyanate (MDI), including its 2,4', 2,2' and 4,4' isomers, homopolymers and mixtures thereof, mixtures of diphenylmethane diisocyanates (MDI) and oligomers thereof, and reaction products of polyisocyanates as set out herein with components containing isocyanate-reactive hydrogen atoms forming polymeric polyisocyanates (prepolymers), toluene diisocyanate (TDI), including 2,4 TDI and 2,6 TDI in any suitable isomer mixture thereof, hexamethylene diisocyanate (HMDI or HDI), isophorone diisocyanate (IPDI), butylene diisocyanate, trimethylhexamethylene diisocyanate, di(isocyanatocyclohexyl)methane, including 4,4'-diisocyanatodicyclohexylmethane (H12MDI), isocyanatomethyl-1,8-octane diisocyanate, tetramethylxylene diisocyanate (TMXDI), 1,5-naphtalenediisocyanate (NDI), p-phenylenediisocyanate (PPDI), 1,4-cyclohexanediisocyanate (CD), tolidine diisocyanate (TODD), any suitable mixture of these polyisocyanates, and any suitable mixture of one or more of these polyisocyanates with MDI-type polyisocyanates.

The polyol reacted with the isocyanate to form the polyurethane polymeric shell may be a member of any of the chemical class of polymeric polyols such as the polyols being polyesters, polyesteramides, polyethers, polythioethers, polycarbonates, polyacetals, polyolefins, polysiloxanes, polyurethanes, or some combination thereof. The polyol may include a polyester polyol, a polycarbonate polyol, or polyester-polycarbonate polyol. The polyol may be a diol, a triol, or higher polyol.

The polyol may be substantially free of a six or more consecutive methylene group chain; and/or the polyol may be formed from monomers comprising a monomer content including at least 10 wt% substituted polyol and/or substituted polyacid, such as at least 20 wt%, at least 25 wt%, at least 30 wt%, at least 35 wt%, at least 40 wt%, at least 50 wt%, at least 60 wt%, at least 70 wt%, at least 80 wt%, at least 90 wt%, at least 95 wt%, or 100 wt%, and/or at least 25 wt% polyol or polyacid containing cyclic content, such as at least 30 wt%, at least 35 wt%, at least 40 wt%, at least 50 wt%, at least 60 wt%, at least 70 wt%, at least 80 wt%, at least 90 wt%, at least 95 wt%, or 100 wt%, based on the total weight of the monomers forming the polyol. The polyol being formed from monomers comprising a monomer content including at least 10 wt% substituted polyol and/or substituted polyacid and/or at least 25 wt% polyol or polyacid containing cyclic content means that the polyol is made up of monomers of the described content.

As used herein, "substantially free of a six or more consecutive methylene group chain" means that less than 5 wt%, such as less than 1 wt% or 0 wt%, of the polyol monomers reacted with the isocyanate to form the polyurethane polymeric shell contain a six or more consecutive methylene group chain.

As described above, the polyol reacted with the isocyanate to form the polyurethane polymeric shell may be any of the above-described classes of polyols. For example, the polyol may be a polyester polyol and/or a polycarbonate polyol. To form the polyol, a reaction mixture containing a polyol may be used (e.g., a polyol reacted with a polyacids to form the polyester polyol or a polyol reacted with a carbonate to form the polycarbonate polyol). The polyacid may be a diacid, a triacid, or higher polyacid. This reaction mixture may include at least a portion of substituted polyol and/or substituted polyacid. As used herein, "substituted polyol and/or substituted polyacid" refers to a polyol or polyacid in which at least one of the hydrogen atoms of an alkyl or aryl or cycloalkyl group in the polyol or polyacid has been substituted with a group other than a hydroxyl group or an acid group. The following diagram shows several non-limiting examples of substituted polyols and substituted polyacids, wherein Y is an alkyl, cycloalkyl, or aryl group, and at least one circled H is substituted with a group other than a hydroxyl group or an acid group.

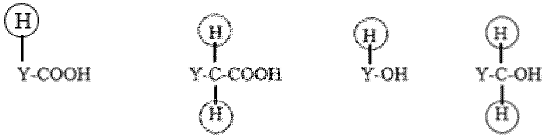

The substituted polyol and/or substituted polyacid may comprise: (a) an acid group bonded to a secondary carbon atom, (b) a hydroxyl group bonded to a primary carbon atom adjacent to a secondary carbon atom, and/or (c) a hydroxyl group bonded to a secondary carbon atom. The substituted polyol or polyacid may include a plurality of pendant alkyl groups as the substituted content.

As described above, the polyol reacted with the isocyanate to form the polyurethane polymeric shell may be a polyester polyol and/or a polycarbonate polyol. To form the polyester polyol and/or the polycarbonate polyol, a reaction mixture containing a polyol may be used (e.g., a polyol reacted with a polyacid to form the polyester polyol or a polyol reacted with a carbonate to form the polycarbonate polyol). This reaction mixture may include at least a portion of monomers having cyclic content. As used herein, a monomer having "cyclic content" refers to the monomer containing a group having an aliphatic or aromatic ring structure. As used herein, wt% of cyclic content refers to wt% of the polyol and/or polyacid monomers reacted to form the polyester polyol and/or polycarbonate polyol which contain cyclic content, based on the total weight of the monomers forming the polyol.

Suitable substituted polyols that may be used in the reaction to form the polyester polyol or polycarbonate polyol may include, but are not limited to: 2-methyl-1,3-propane diol, hydroxypivalyl hydroxypivalate glycol, tetramethylolmethane, e.g., pentaerythritol; trimethylolethane; trimethylolpropane; di-(trimethylolpropane)dimethylol propionic acid; 2,2,4-trimethyl-1,3-pentanediol; 2-methyl-1,3 pentanediol; 2-ethyl-1,3-hexanediol; 2,2-dimethyl-1,3-propanediol; 1,4-cyclohexanediol; 2,2-dimethyl-3-hydroxypropyl-2,2-dimethyl-3-hydroxypropionate; 1,4-cyclohexanedimethanol; 1,2-bis(hydroxymethyl)cyclohexane; 1,2-bis(hydroxyethyl)-cyclohexane; neopentyl glycol, cyclohexane dimethanol, 2-methyl-1,4-butanediol, 3-ethyl-1,5-pentanediol, and/or 2-ethyl-1,6,-hexanediol. Combinations of these substituted polyols may be used.

Suitable polyols containing cyclic content that may be used in the reaction to form the polyester polyol may include but are not limited to: cyclic diols, such as 1,4-cyclohexanedimethanol, 1,2-cyclopentanediol, 1,4-cyclohexanediol, 1,6-cyclohexanediol, 1,7-cycloheptanediol, 1,2-bis(hydroxymethyl)cyclohexane, 1,2-bis(hydroxyethyl)-cyclohexane, and/or 1,8-cyclooctanediol. Combinations of these polyols containing cyclic content may be used.

Suitable substituted polyacids that may be used in the reaction to form the polyester polyol may include but are not limited to: phthalic acid, isophthalic acid, terephthalic acid, trimellitic acid, tetrahydrophthalic acid, and/or anhydrides of the above acids. Combinations of these substituted polyacids may be used.

Suitable polyacids containing cyclic content that may be used in the reaction to form the polyester polyol may include but are not limited to: cyclic dicarboxylic acids, such as 1,4-cyclohexane dicarboxylic acid, 1,4-cyclobutanedicarboxylic acid, 1,2,3-benzenetricarboxylic acid, toluene dicarboxylic acid, and/or terephthalic acid. Combinations of these polyacids containing cyclic content may be used.

Suitable examples of carbonates for reaction with the polyol to form the polycarbonate polyol include dimethyl carbonate, diethyl carbonate, ethylene carbonate, propylene carbonate, 1,2-butylene carbonate, and/or 2,3-butylene carbonate. Combinations of these carbonates may be used.

The polyol may be formed from monomers containing acid groups such as carboxy group-containing diols and triols which may render the polyurethane shell water dispersible. Suitable carboxy group-containing diols include, for example, dihydroxyalkanoic acids of the formula R¹C(CH₂OH)₂COOH wherein R¹ is hydrogen or a C₁-C₁₀ alkyl group, such as 2,2-dimethylolpropionic acid (DMPA) or dimethylolbutanoic acid (DMBA). If desired, the carboxy-containing diol or triol may be incorporated into a polyester by reaction with a dicarboxylic acid before being incorporated into the prepolymer. Useful acid group containing compounds include aminocarboxylic acids, for example lysine, cysteine, and/or 3,5-diaminobenzoic acid.

The polyol (e.g., the polyester polyol) may define a Hansen Solubility Parameter space at least partially overlapping (overlapping at least one point of) the Hansen Solubility Parameter space defined by [δ_{d} = 13.3, δₚ = 11.5, δₕ = 5.5], R (radius) = 14.7, or having a radius of 10, or a radius of 8, or a radius of 7, or a radius of 6.5, or a radius of 6, or a radius of 5.

Hansen solubility parameters can be used to predict whether one material will dissolve in another material to form a solution. The Hansen solubility parameters for the polyol include three numbers, corresponding to a dispersion parameter (δ_{d}), a polarity parameter (δₚ), and a hydrogen bonding parameter (δₕ). These three parameters can be treated as coordinates (Hansen Solubility Parameter coordinate) for a point in three-dimensional space (Hansen Solubility Parameter space), [(δ_{d}), (δₚ), (δₕ)]. A radius (R) about the Hansen Solubility Parameter coordinate associated with the polyol can also be determined, such that the Hansen Solubility Parameter space for the polyol is defined as the Hansen Solubility Parameter coordinate and radius about the Hansen Solubility Parameter coordinate.

The dispersion parameter (δ_{d}), polarity parameter (δₚ), hydrogen bonding parameter (δₕ), and the radius (R) reported herein are determined using the following method (Hansen Solubility Method).

For each resin tested for Hansen Solubility Parameters, 30- 20 mL scintillations vials were prepared by adding 0.5 grams of resin solids into each vial. For each vial, 5mL of a single solvent from Table A (below) was added to each vial, such that each of the 30 vials contains a different solvent from Table A mixed with the resin. Each vial is shaken for 1 hour at 100 RPM and allowed to sit at ambient laboratory temperature for 24 hours. The solubility of the resin in each solvent is determined based on a solubility score having a scale of 1-6, with 1 corresponding to fully soluble, 6 corresponding to fully insoluble, and scores therebetween indicating a relative degree of solubility/insolubility in between. The solubility scores for the resin in each of the 30 solvents are entered into HSPiP software Version 5.0.13, which calculates the dispersion parameter (δ_{d}), polarity parameter (δₚ), hydrogen bonding parameter (δₕ), and radius (R) for the resin based on the experimentally determined solubility scores for the 30 resins from Table A.

**Table A**

| # | Solvent |
|---|---|
| 1 | Acetone |
| 2 | n-hexane |
| 3 | Dichloromethane |
| 4 | N-Methylformamide |
| 5 | Acetonitrile |
| 6 | Propylene carbonate |
| 7 | Benzyl alcohol |
| 8 | N-Methyl pyrrolidone |
| 9 | Methanol |
| 10 | Dimethylformamide (DMF) |
| 11 | Tetrahydrofuran (THF) |
| 12 | Chloroform |
| 13 | Dimethyl sulfoxide |
| 14 | Dipropylene glycol |
| 15 | Ethanol 99.9% |
| 16 | Cyclohexane |
| 17 | Toluene |
| 18 | Isopropyl alcohol (2-propanol) |
| 19 | Glycerol carbonate |
| 20 | Methyl ethyl ketone (2-butanone) |
| 21 | γ-Butyrolacetone |
| 22 | 1,4-dioxane |
| 23 | Diacetone alcohol |
| 24 | Diethylene glycol |
| 25 | Ethyl acetate |
| 26 | Methyl isobutyl ketone |
| 27 | Water |
| 28 | Isophorone |
| 29 | n-Butyl acetate |
| 30 | Propylene glycol monomethyl ether |

The urethane acrylate core-shell particles may be prepared as follows.

The polymeric shell including a urethane linkage may be a water-dispersible carboxy-containing polyurethane prepolymer formed from a reaction mixture including (a) the previously-described polyol (e.g., the polyester polyol and/or the polycarbonate polyol), (b) a polymerizable ethylenically unsaturated monomer containing at least one acrylic functional group and at least one active hydrogen group, and (c) the previously-described isocyanate. The water-dispersible polyurethane prepolymer may be prepared by reacting a stoichiometric excess of the isocyanate with the polyols under substantially anhydrous conditions at a temperature of 30° to 130°C until the reaction between the isocyanate groups and the active hydrogen (hydroxyl) group is substantially complete (the reaction may be run until the theoretical NCO equivalent weight has been reached). An isocyanate and the active hydrogen containing components are suitably reacted in such proportions that the ratio of number of isocyanate groups to the number of active hydrogen groups is in the range from 1.1:1 to 6:1, such as within the range of from 1.5:1 to 3:1.

Polymerizable ethylenically unsaturated monomers containing at least one acrylic functional group and at least one active hydrogen group to react with isocyanate may include ethylenically unsaturated groups such as acrylates or methacrylates. The acrylate and methacrylate functional groups may be represented by the formula, CH₂=C(R²)-C(O)O-, wherein R² is hydrogen or methyl. Other monomers may include allyl carbamates and allyl carbonates. The allyl carbamates and carbonates may be represented by the formulae CH₂=CH-CH₂-NH-C(O)O- and CH₂=CH-CH₂-O-(C)O-, respectively. For example, the ethylenically unsaturated monomer with an acrylic functional group and an active hydrogen group utilized in preparing the polyurethane prepolymers may comprise a hydroxyalkyl (meth)acrylate. Suitable hydroxyalkyl(meth)acrylates include those having from 1 to 18 carbon atoms in the alkyl radical, the alkyl radical being substituted or unsubstituted. Specific non-limiting examples of such materials include 2-hydroxyethyl(meth)acrylate (HEMA), 2-hydroxypropyl(meth)acrylate, 2-hydroxybutyl(meth)acrylate, hexane-1,6-diol mono(meth)acrylate, 4-hydroxybutyl(meth)acrylate, as well as mixtures thereof. As used herein, the term "(meth)acrylate" is meant to include both acrylates and methacrylates.

Once the shell (e.g., the polyurethane prepolymer) is formed, the shell may be added to a reaction mixture containing water along with the previously-described polymerizable ethylenically unsaturated monomers used to prepare the polymeric acrylic core. A neutralizing amine, a chain extending amine, and/or a chain terminating amine may also be added to the reaction mixture. It should be appreciated that the order of addition of the previously-described polymerizable ethylenically unsaturated monomers used to prepare the polymeric acrylic core and the neutralizing amine may be varied. An initiator composition may be added to the reaction mixture in one or more stages to effect and/or continue polymerization.

The neutralizing amine may be included to neutralize the acid functionality of the carboxy groups and to render the reaction product water dispersible, e.g., an amount to substantially neutralize the carboxylic functionality. Suitably, the amine may be added at from 65 to 100% amine equivalent per equivalent of carboxy functionality. The amine may include a tertiary amine that is relatively volatile so that they evaporate from the coating upon curing. Suitable neutralizing amines include amines of the formula N(R³)(R⁴)(R⁵) where R³, R⁴, and R⁵ are independently C₁-C₄ alkyl and hydroxyalkyl groups, such as triethyl amine, dimethylethanol amine, methyldiethanol amine, and methyldiethyl amine.

Suitable chain extending amines may include at least two amine groups, each amine group having at least one, such as at least two protons thereon. The chain extending amine may include ethylenediamine, diethylene triamine, triethylene tetramine, propylene diamine, butylene diamine, hexamethylene diamine, cyclohexylene diamine, piperazine, 2-methyl piperazine, phenylene diamine, toluene diamine, tris(2-aminoethyl)amine, 4,4'-methylenebis(2-chloraniline), 3,3'-dichloro-4,4'-diphenyl diamine, 2,6-diaminopyridine, 4,4'-diaminodiphenyl methane, isophorone diamine, and adducts of diethylenetriamine with acrylate or its hydrolyzed products, especially C₂-C₁₀ alkylamines such as dimethyl ethylene diamine (DMEA). The amount of chain extender employed should be approximately equivalent to the free isocyanate groups in the polyurethane prepolymer and the ratio of active hydrogens in the chain extender to isocyanate groups in the polyurethane prepolymer may be in the range from 0.7 to 1.3:1.

Suitable chain terminating amines may include monofunctional amines. The chain terminating amine may include C₁-C₆ alkyl amines such as butylamine, diethylamine, diisopropylamine, and dibutylamine, and C₁-C₆ hydroxyamines such as ethanolamine, diethanolamine, and diisopropanolamine.

The reaction mixture may be subjected to free radical initiated polymerization by adding free radical initiators thereto to polymerize the previously-described polymerizable ethylenically unsaturated monomers used to prepare the polymeric acrylic core to form the polymeric acrylic core. Suitable free radical initiators include what are known as redox initiators, which are composed of at least one organic reducing agent and at least one peroxide and/or hydroperoxide, e.g., tert-butyl hydroperoxide with sulfur compounds, e.g. the sodium salt of hydroxymethanesulfinic acid, sodium sulfite, sodium disulfite, sodium thiosulfate or acetone bisulfite adduct, or hydrogen peroxide with ascorbic acid. Alternatively, free radical polymerization of the reaction mixture may be conducted with addition of polymerization initiators at an elevated temperature, namely a temperature sufficient to liberate free radicals at a rate that sustains the polymerization reaction and to complete chain extension of the prepolymer since the chain extending reaction begins to proceed upon the addition of the chain extender to the aqueous dispersion. A suitable temperature range may be from 50° to 90°C. Suitable thermal free radical initiators include, but are not limited to, peroxide compounds, azo compounds, persulfate compounds, and mixtures thereof. The polymeric acrylic core may be covalently bonded to the polymeric shell to form the urethane acrylate core-shell particle.

The urethane acrylate core-shell particles may have at least one measurable Tg of at least -50°C, such as at least -30°C, at least -10°C, at least 0°C, at least 10°C, at least 20°C at least 30°C, at least 50°C, or at least 75°C. The urethane acrylate core-shell particles may have at least one measurable Tg of up to 100°C, such as up to 75°C, up to 50°C, up to 30°C, or up to 10°C. The urethane acrylate core-shell particles may have at least one measurable Tg of from -50°C-100°C, such as from -10°C-75°C, such as from 0°C-30°C, such as from 0°C-50°C, such as from 0°C-75°C, such as from 10°C-50°C, such as from 10°C-75°C, such as from 30°C-100°C, such as from 30°C-75°C, or such as from 30°C-50°C. As used herein, Tg refers to the measured Tg of the urethane acrylate core-shell particles measured by differential scanning calorimetry according to ASTM D3418-15.

It is appreciated that the core-shell particles described herein are dispersed in an aqueous medium to form a latex. As used herein, a "latex", with respect to the aqueous dispersed core-shell particles, refers to an aqueous colloidal dispersion of polymeric particles.

The coating composition may further comprise a second resin, different from the urethane acrylate core-shell particles. The second resin may include an acrylic resin, poly(vinyl acetate), a vinyl acetate-ethylene copolymer, or some mixture thereof.

The second resin may be an acrylic resin that is the reaction product of ethylenically unsaturated monomers, which may include polyethylenically unsaturated monomers (e.g., a monomer including at least two ethylenically unsaturated functionalities).

Suitable ethylenically unsaturated monomers with only one site of unsaturation for preparation of the second resin, e.g., mono-ethylenically unsaturated monomers include, but are not limited to, styrene, alpha-methylstyrene, vinyl toluene, 4-methylstyrene, tert-butylstyrene, 2-chlorostyrene, vinylpyridine, vinylpyrrolidone, methyl crotonoate, sodium crotonoate, ethyl acrylate, propyl acrylate, isopropyl acrylate, butyl acrylate, 2-ethylhexyl acrylate, decyl acrylate, hydroxyethyl acrylate, methyl methacrylate, ethyl methacrylate, propyl methacrylate, isopropyl methacrylate, butyl methacrylate, sec-butyl methacrylate, isobutyl methacrylate, n-amyl methacrylate, isoamyl methacrylate, n-hexyl methacrylate, tert-butyl methacrylate, 2-ethylhexyl methacrylate, n-octyl methacrylate, methallyl methacrylate, phenyl methacrylate, benzyl methacrylate, allyl methacrylate, cyclohexyl methacrylate, 2-hydroxyethyl methacrylate, 2-hydroxypropyl methacrylate, N,N-dimethylaminoethyl methacrylate, N,N-diethylamino ethyl methacrylate, tert-butylamino ethyl methacrylate, 2-sulfoethyl methacrylate, trifluoroethyl methacrylate, glycidyl methacrylate, 2-n-butoxyethyl methacrylate, 2-chloroethyl methacrylate, 2-ethylbutyl methacrylate, cinnamyl methacrylate, cyclopentyl methacrylate, 2-ethoxyethyl methacrylate, furfuryl methacrylate, hexafluoroisopropyl methacrylate, 3-methoxybutyl methacrylate, 2-methoxybutyl methacrylate, 2-nitro-2-methylpropyl methacrylate, 2-phenoxyethyl methacrylate, 2-phenylethyl methacrylate, propargyl methacrylate, tetrahydrofurfuryl methacrylate, tetrahydropyranyl methacrylate, methacrylamide, N-methylmethacrylamide, N-ethylmethacrylamide, N,N-diethylmethacrylamide, N,N-dimethylmethacrylamide, N-phenylmethacrylamide, acrylamide, N,N-diethylacrylamide, N-ethylacrylamide, diacetone acrylamide, methyl 2-cyanoacrylate, methyl α-chloroacrylate, methacrolein, acrolein, methacrylonitrile, and/or acrylonitrile.

Specific non-limiting examples of polyethylenically unsaturated monomers that can be used for preparation of the second resin include, but are not limited to, diacrylates, such as 1,6-hexanediol diacrylate, 1,4-butanediol diacrylate, ethylene glycol diacrylate, diethylene glycol diacrylate, tetraethylene glycol diacrylate, tripropylene glycol diacrylate, neopentyl glycol diacrylate, 1,4-butanediol dimethacrylate, poly(butanediol) diacrylate, tetraethylene glycol dimethacrylate, 1,3-butylene glycol diacrylate, triethylene glycol diacrylate, triisopropylene glycol diacrylate, polyethylene glycol diacrylate, and/or bisphenol A dimethacrylate; triacrylates, such as trimethylolpropane triacrylate, trimethylolpropane trimethacrylate, pentaerythritol monohydroxy triacrylate, and/or trimethylolpropane triethoxy triacrylate; tetraacrylates, such as pentaerythritol tetraacrylate, and/or di-trimethylolpropane tetraacrylate; and/or pentaacrylates, such as dipentaerythritol (monohydroxy) pentaacrylate.

The second resin can be prepared via aqueous emulsion polymerization techniques or via organic solution polymerization techniques with groups capable of salt formation such as acid or amine groups. Upon neutralization of these groups with a base or acid, the polymers can be dispersed into an aqueous medium to form a latex.

The second resin may have a Mw of at least 100,000, as measured by gel permeation chromatography using a polystyrene standard according to ASTM D6579-11 (performed using a Waters 2695 separation module with a Waters 2414 differential refractometer (RI detector); tetrahydrofuran (THF) was used as the eluent at a flow rate of 1 ml/min, and two PLgel Mixed-C (300×7.5 mm) columns were used for separation at the room temperature; weight and number average molecular weight of polymeric samples can be measured by gel permeation chromatography relative to linear polystyrene standards of 800 to 900,000 Da).

In a coating composition including the urethane acrylate core-shell particles and the second resin, the urethane acrylate core-shell particles may have a z-average particle size smaller than the second resin particles. The z-average particle size can be measured using dynamic light scattering techniques and instruments well known in the art. Samples are diluted and dispersed in an appropriate solvent for light scattering. As reported herein, the z-average particle size is measured according to the following "Particle Size Test Method" in which the measurement instrument, a Malvern Zetasizer Nano ZS, evaluates the changes in the light intensity pattern for the sample, and calculates an average particle diameter and distribution. This instrument uses Dynamic Light Scattering (DLS) for measurements. This instrument relies on Brownian motion to determine the diffusion rate which is inversely proportional to particle size. The samples were dispersed in water and placed in a cuvette for measurement, using a refractive index of 1.59 for the latex. For example, the second resin particles may be a z-average particle size that is greater than the urethane acrylate resin particles by at least 10%, such as at least 20%, at least 30%, at least 40%, at least 50%, or at least 60%.

The coating composition may include the urethane acrylate core-shell particles in an amount of at least 10 wt%, at least 20 wt%, at least 30 wt%, at least 40 wt% at least 50 wt%, at least 60 wt%, at least 70 wt%, at least 80 wt%, at least 90 wt%, or 100 % based on total resin solids weight. The coating composition may include the urethane acrylate core-shell particles in an amount of up to 100 wt%, up to 90 wt%, up to 80 wt%, up to 70 wt%, up to 60 wt%, up to 50 wt%, up to 40 wt%, up to 30 wt%, or up to 20 wt% based on total resin solids weight. The coating composition may include the urethane acrylate core-shell particles in a range from 1 to 100 wt%, from 10 to 90 wt%, from 20 to 80 wt%, from 30 to 70 wt%, from 40 to 60 wt%, from 10 to 50 wt%, from 10 to 40 wt%, from 20 to 30 wt%, from 20 to 50 wt%, from 20 to 40 wt%, from 30 to 50 wt%, from 30 to 40 wt%, or from 40 to 50 wt% based on total resin solids weight.

The coating composition including the urethane acrylate core-shell particles and the second resin (e.g., resin blend) may include the urethane acrylate core-shell particles in an amount of at least 10 wt%, at least 20 wt%, at least 30 wt%, at least 40 wt%, at least 50 wt%, at least 60 wt%, at least 70 wt%, at least 80 wt%, or at least 90 wt% of the resin blend, based on total resin solids weight. The coating composition including the urethane acrylate core-shell particles and the second resin (e.g., resin blend) may include the urethane acrylate core-shell particles in an amount of up to 90 wt%, up to 80 wt%, up to 70 wt%, up to 60 wt%, up to 50 wt%, up to 40 wt%, up to 30 wt%, or up to 20 wt% of the resin blend, based on total resin solids weight. The coating composition including the urethane acrylate core-shell particles and the second resin (e.g., resin blend) may include the urethane acrylate core-shell particles in a range of from 10 to 90 wt%, from 20 to 80 wt%, from 30 to 70 wt%, from 40 to 60 wt%, from 10 to 50 wt%, from 10 to 40 wt%, from 20 to 30 wt%, from 20 to 50 wt%, from 20 to 40 wt%, from 30 to 50 wt%, from 30 to 40 wt%, or from 40 to 50 wt% of the resin blend, based on total resin solids weight.

The coating composition including the urethane acrylate core-shell particles and the second resin (e.g., resin blend) may include the second resin in an amount of at least 10 wt%, at least 20 wt%, at least 30 wt%, at least 40 wt%, at least 50 wt%, at least 60 wt%, at least 70 wt%, at least 80 wt%, or at least 90 wt% of the resin blend, based on total resin solids weight. The coating composition including the urethane acrylate core-shell particles and the second resin (e.g., resin blend) may include the second resin in an amount of up to 90 wt%, up to 80 wt%, up to 70 wt%, up to 60 wt%, up to 50 wt%, up to 40 wt%, up to 30 wt%, or up to 20 wt% of the resin blend, based on total resin solids weight. The coating composition including the urethane acrylate core-shell particles and the second resin (e.g., resin blend) may include the second resin in a range of from 10 to 90 wt%, from 20 to 80 wt%, from 30 to 70 wt%, from 40 to 60 wt%, from 10 to 50 wt%, from 10 to 40 wt%, from 20 to 30 wt%, from 20 to 50 wt%, from 20 to 40 wt%, from 30 to 50 wt%, from 30 to 40 wt%, or from 40 to 50 wt% of the resin blend, based on total resin solids weight.

The coating composition can also comprise a crosslinker. Non-limiting examples of crosslinkers include polyhydrazides, carbodiimides, polyols, phenolic resins, epoxy resins, beta-hydroxy (alkyl) amide resins, hydroxy (alkyl) urea resins, oxazolines, alkylated carbamate resins, (meth)acrylates, isocyanates, blocked isocyanates, polyacids, anhydrides, organometallic acid-functional materials, polyamines, polyamides, aminoplasts, aziridines, and combinations thereof.

The present disclosure also relates to a coating composition that includes: (i) acrylic core-shell particles having a z-average particle size of up to 100 nm; and (ii) non-core-shell acrylic resin particles, wherein the acrylic core-shell particles have a z-average particle size smaller than the non-core-shell acrylic resin particles, as measured according to the Particle Size Test Method.

The acrylic core-shell particles may be the urethane acrylate core-shell particles previously described. The acrylic core-shell particles may be an acrylic core-shell particle free of any urethane linkages. The acrylic core-shell particles may have an acrylic core and an acrylic shell covalently bonded to the acrylic core and/or at least partially encapsulating the acrylic core. The acrylic core-shell particle may include an acrylic silane. The acrylic core-shell particle may be prepared from a reaction mixture containing (meth)acrylate, an alkyl siloxane, and butyl acrylate. The acrylic core-shell particle may be prepared from any of the above ethylenically unsaturated monomers and/or may be prepared from gamma-methacryloxypropyltrimethoxysilane.

The acrylic core-shell particles may have a z-average particle size of up to 100 nm, such as up to 90 nm, up to 80 nm, up to 70 nm, up to 60 nm, up to 50 nm, up to 40 nm, up to 30 nm, or up to 20 nm. The acrylic core-shell particles may have a z-average particle size of from 40-100 nm, such as 50-100 nm, such as 60-100 nm, such as 70-100 nm, such as 40-60 nm, such as 40-70 nm, such as 40-80 nm, such as 50-70 nm, or such as 50-80 nm.

The non-core-shell acrylic resin may include any of the above-described acrylic second resins. The non-core-shell acrylic resin does not comprise a core-shell structure. The non-core-shell acrylic resin particles may have a z-average particle size at least 10% greater than the acrylic core-shell particles, such as at least 20%, at least 30%, at least 40%, at least 50%, or at least 60%. The non-core-shell acrylic resin may have a z-average particle size of at least 100 nm, such as at least 110 nm, at least 120 nm, at least 130 nm, at least 140 nm, at least 150 nm, or at least 160 nm. The non-core-shell acrylic resin may have a z-average particle size of from 100-200 nm, such as 110-190 nm, or 120-180 nm.

The acrylic core-shell particles may have at least one measurable Tg of at least -50°C, such as at least -30°C, at least -10°C, at least 0°C, at least 10°C, at least 20°C at least 30°C, at least 50°C, or at least 75°C. The acrylic core-shell particles may have at least one measurable Tg of up to 100°C, such as up to 75°C, up to 50°C, up to 30°C, or up to 10°C. The acrylic core-shell particles may have at least one measurable Tg of from -50°C-100°C, such as from -10°C-75°C, such as from 0°C-30°C, such as from 0°C-50°C, such as from 0°C-75°C, such as from 10°C-50°C, such as from 10°C-75°C, such as from 30°C-100°C, such as from 30°C-75°C, or such as from 30°C-50°C. As used herein, Tg refers to the measured Tg of the urethane acrylate core-shell particles measured by differential scanning calorimetry according to ASTM D3418-15.

The coating composition including acrylic core-shell particles and the non-core-shell acrylic resin may exhibit improved stain resistance compared to the same coating composition not including the acrylic core-shell particles.

The coating composition including the acrylic core-shell particles and the non-core-shell acrylic resin may include the acrylic core-shell particles in an amount of at least 10 wt%, at least 20 wt%, at least 30 wt%, or at least 40 wt% of the resin blend, based on total resin solids weight. The coating composition including the acrylic core-shell particles and the non-core-shell acrylic resin may include the acrylic core-shell particles in an amount of up to 50 wt%, up to 40 wt%, up to 30 wt%, or up to 20 wt% of the resin blend, based on total resin solids weight. The coating composition including the acrylic core-shell particles and the non-core-shell acrylic resin may include the acrylic core-shell particles in a range of from 10 to 50 wt%, or from 10 to 40 wt%, or from 20 to 30 wt%, or from 20 to 50 wt%, or from 20 to 40 wt%, or from 30 to 50 wt%, or from 30 to 40 wt%, or from 40 to 50 wt% of the resin blend, based on total resin solids weight.

The coating composition including the acrylic core-shell particles and the non-core-shell acrylic resin may include the non-core-shell acrylic resin in an amount of at least 50 wt%, at least 60 wt%, at least 70 wt%, or at least 80 wt% of the resin blend, based on total resin solids weight. The coating composition including the acrylic core-shell particles and the non-core-shell acrylic resin may include the non-core-shell acrylic resin in an amount of up to 90 wt%, up to 80 wt%, up to 70 wt%, or up to 60 wt% of the resin blend, based on total resin solids weight. The coating composition including the acrylic core-shell particles and the non-core-shell acrylic resin may include the non-core-shell acrylic resin in a range of from 50 to 90 wt%, or from 50 to 80 wt%, or from 50 to 70 wt%, or from 50 to 60 wt%, or from 60 to 90 wt%, or from 60 to 80 wt%, or from 60 to 70 wt%, or from 70 to 90 wt%, or from 70 to 80 wt%, or from 80 to 90 wt% of the resin blend, based on total resin solids weight.

The above-described coating compositions of the present invention may be formulated to include a variety of optional ingredients and/or additives, such as antioxidants, catalysts, coalescing agents, initiators, colorants (e.g., pigments and/or dyes), biocides, biostats, reinforcements, thixotropes, accelerators, surfactants, plasticizers, extenders, stabilizers, corrosion inhibitors, diluents, hindered amine light stabilizers, and/or UV light absorbers.

The coating compositions of the present invention may contain little or no volatile organic content (VOC), such as below 50g/L or below 25g/L or below 5g/L or 0g/L.

The present invention is also directed to a method of coating a substrate with any of the stain resistant coating compositions described herein. The method includes applying the coating composition over at least a portion of a substrate. The coating composition can be applied in liquid form and coalesced to form a coating, such as dried at ambient temperature conditions in the range of -10°C to 50°C.

Formulation of the coating composition may involve the process of selecting and admixing appropriate coating ingredients in the correct proportions to provide a paint with specific processing and handling properties, as well as a final dry paint film with the desired properties. The aqueous coating compositions may be applied by application methods such as, for example, brushing, roller application, and spraying methods such as, for example, air-atomized spray, air-assisted spray, airless spray, high volume low pressure spray, and air-assisted airless spray.

Suitable substrates over which the coating compositions may be applied include, but are not limited to, architectural substrates, such as metallic or non-metallic substrates including: concrete, stucco, masonry elements, cement board, MDF (medium density fiberboard) and particle board, gypsum board, wood, stone, metal, plastics (e.g., vinyl siding and recycled plastics), wall paper, textiles, plaster, fiberglass, ceramic, and the like, which may be pre-primed by waterborne or solvent borne primers. The architectural substrate may be an interior wall (or other interior surface) of a building or residence. The architectural substrate may be an outdoor substrate exposed to outdoor conditions. The architectural substrate may be smooth or textured.

When applied to a substrate and coalesced to form a coating thereon, the coating containing the urethane acrylate core-shell particles and/or the acrylic core-shell particles exhibits good stain resistance, having a stain rating of at least 45, such as at least 50, at least 55, at least 60, at least 65, at least 70, at least 75, at least 80, or at least 85. Stain rating is determined using the Stain Resistance Test Method described below in the Examples. The coating may exhibit the good stain resistance to both oil-based and water-based stains, making the coating omniphobic.

When the coating composition is applied to a substrate and coalesced to form a coating, the coating may exhibit a stain rating for grape juice of at least 6, such as at least 7, at least 8, or at least 9, as measured according to the Stain Resistance Test Method. When the coating composition is applied to a substrate and coalesced to form a coating, the coating may exhibit a stain rating for lipstick of at least 4, such as at least 5, at least 6, at least 7, at least 8, or at least 9, as measured according to the Stain Resistance Test Method. When the coating composition is applied to a substrate and coalesced to form a coating, the coating may exhibit a stain rating for coffee of at least 3, such as at least 4 or at least 5, as measured according to the Stain Resistance Test Method. When the coating composition is applied to a substrate and coalesced to form a coating, the coating exhibits a stain rating for wine of at least 5, such as at least 6, at least 7, or at least 8, as measured according to the Stain Resistance Test Method.

When applied to a substrate and coalesced to form a coating thereon, the coating containing the urethane acrylate core-shell particles and/or the acrylic core-shell particles exhibits a good dirt pickup resistance, having a ΔE less than 20, such as less than 19, less than 18, less than 17, less than 15, less than 12, less than 10, less than 7, or less than 5. Dirt pickup resistance is determined using the Dirt Pickup Resistance Test Method described below in the Examples. The coating containing the urethane acrylate core-shell particles and/or the acrylic core-shell particles described herein may exhibit an improved dirt pickup resistance compared to a coating not including the urethane acrylate core-shell particles and/or the acrylic core-shell particles described herein.

In view of the foregoing description and examples the present invention thus relates inter alia to the subject matter of the following clauses though being not limited thereto.

Clause 1: A stain resistant coating composition comprising: urethane acrylate core-shell particles comprising (1) a polymeric acrylic core; and (2) a polymeric shell comprising a urethane linkage, wherein the polymeric shell is formed from a reaction mixture comprising an isocyanate and a polyol, wherein: (a) the polyol is substantially free of a six or more consecutive methylene group chain; and/or (b) the polyol is formed from monomers comprising a monomer content (i) including at least 10 wt% substituted polyol and/or substituted polyacid and/or (ii) including at least 25 wt% polyol or polyacid containing cyclic content, based on the total weight of the monomers forming the polyol.

Clause 2: The coating composition of clause 1, further comprising a second resin comprising an acrylic resin, poly(vinyl acetate), a vinyl acetate-ethylene copolymer, or mixtures thereof.

Clause 3: The coating composition of clause 1 or 2, wherein the polyol comprises a plurality of pendant alkyl groups.

Clause 4: The coating composition of any of clauses 1-3, wherein the polyol comprises a polyester polyol and/or a polycarbonate polyol, wherein the polyester polyol and/or the polycarbonate polyol are formed from monomers comprising a monomer content including at least 35 wt% substituted polyol and/or substituted polyacid and/or at least 35 wt% polyol or polyacid containing cyclic content, based on the total weight of the monomers forming the polyol.

Clause 5: The coating composition of any of clauses 1-4, wherein the polyester polyol is prepared from a reaction mixture comprising: 2-methyl-1,3-propanediol, 1,4-cyclohexane dicarboxylic acid, and hydroxypivalyl hydroxypivalate glycol.

Clause 6: The coating composition of any of clauses 1-5, wherein the urethane acrylate core-shell particles have at least one measurable Tg of from -50°C to 100°C, measured by differential scanning calorimetry according to ASTM D3418-15.

Clause 7: The coating composition of any of clauses 1-6, further comprising a coalescing agent.

Clause 8: The coating composition of any of clauses 2-7, wherein the second resin comprises acrylic resin particles having a Mw of at least 100,000.

Clause 9: The coating composition of any of clauses 1-8, wherein a volatile organic content (VOC) of the coating composition is less than 50 g/L.

Clause 10: The coating composition of any of clauses 2-9, wherein the second resin comprises acrylic resin particles having a z-average particle size at least 10% greater than the urethane acrylate core-shell particles, as measured according to the Particle Size Test Method.

Clause 11: The coating composition of any of clauses 2-10, wherein the second resin comprises acrylic resin particles, wherein the urethane acrylate core-shell particles have a z-average particle size smaller than the acrylic resin particles, as measured according to the Particle Size Test Method.

Clause 12: The coating composition of any of clauses 1-11, wherein the polyol comprises a polyester polyol and/or a polycarbonate polyol.

Clause 13: A stain resistant coating composition comprising: urethane acrylate core-shell particles comprising (1) a polymeric acrylic core; and (2) a polymeric shell comprising a urethane linkage, wherein the polymeric shell is formed from a reaction mixture comprising an isocyanate and a polyol, wherein when the coating composition is applied to a substrate and coalesced to form a coating, the coating exhibits a stain rating of at least 45, as measured according to the Stain Resistance Test Method.

Clause 14: The coating composition of any of clause 13, wherein a volatile organic content (VOC) of the coating composition is less than 50 g/L.

Clause 15: The coating composition of clause 13 or 14, wherein the polyol has a calculated Hansen Solubility Parameter space at least partially overlapping a Hansen Solubility Parameter space defined by [δ_{d} = 13.3, δₚ = 11.5, δₕ = 5.5], R= 14.7, or having a radius of 10, or a radius of 8, or a radius of 7, or a radius of 6.5, or a radius of 6, or a radius of 5.

Clause 16: The coating composition of any of clauses 13-15, wherein when the coating composition is applied to the substrate and coalesced to form the coating, the coating exhibits a dirt pickup resistance having a ΔE less than 20, as measured according to the Dirt Pickup Resistance Test Method.

Clause 17: The coating composition of any of clauses 13-16, further comprising a second resin comprising an acrylic resin, poly(vinyl acetate), a vinyl acetate-ethylene copolymer, or mixtures thereof.

Clause 18: A substrate at least partially coated with a coating formed from the coating composition of any of clauses 1-17.

Clause 19: The substrate of clause 18, wherein the substrate comprises an architectural component.

Clause 20: A polyester polyol formed from monomers comprising a monomer content comprising: at least 10 wt% substituted polyol and/or substituted polyacid and/or at least 25 wt% polyol or polyacid containing cyclic content, based on the total weight of the monomers forming the polyol.

Clause 21: The polyester polyol of clause 20, wherein the reaction mixture comprises: 2-methyl-1,3-propanediol, 1,4-cyclohexane dicarboxylic acid, and hydroxypivalyl hydroxypivalate glycol.

Clause 22: A stain resistant coating composition comprising: (i) acrylic core-shell particles having a z-average particle size of up to 100 nm; and (ii) non-core-shell acrylic resin particles, wherein the acrylic core-shell particles have a z-average particle size smaller than the non-core-shell acrylic resin particles, wherein z-average particle size is measured according to the Particle Size Test Method.

Clause 23: The coating composition of clause 22, wherein the non-core-shell acrylic resin particles have a z-average particle size at least 10% greater than the acrylic core-shell particles, as measured according to the Particle Size Test Method.

Clause 24: The coating composition of clause 22 or 23, wherein the acrylic core-shell particles comprise urethane acrylate core-shell particles, such as the urethane acrylate core-shell particles according to any of clauses 1-17.

Clause 25: The coating composition of any of clauses 22-24, wherein the non-core-shell acrylic resin particles include any of the acrylic second resins of any of clauses 2 to 17.

Clause 26: The coating composition of any of clauses 1-17, wherein when the coating composition is applied to a substrate and coalesced to form a coating, the coating exhibits a stain rating for grape juice of at least 6, as measured according to the Stain Resistance Test Method

Clause 27: The coating composition of any of clauses 1-17 and 26, wherein when the coating composition is applied to a substrate and coalesced to form a coating, the coating exhibits a stain rating for lipstick of at least 6, as measured according to the Stain Resistance Test Method.

Clause 28: The coating composition of any of clauses 22-25, wherein when the coating composition is applied to a substrate and coalesced to form a coating, the coating exhibits a stain rating for grape juice of at least 6, as measured according to the Stain Resistance Test Method.

Clause 29: The coating composition of any of clauses 22-25 and 28, wherein when the coating composition is applied to a substrate and coalesced to form a coating, the coating exhibits a stain rating for lipstick of at least 4, as measured according to the Stain Resistance Test Method.

Clause 30: The coating composition of any of clauses 22-25 and 28-29, wherein when the coating composition is applied to a substrate and coalesced to form a coating, the coating exhibits a stain rating for coffee of at least 3, as measured according to the Stain Resistance Test Method.

Clause 31: The coating composition of any of clauses 22-25 and 28-30, wherein when the coating composition is applied to a substrate and coalesced to form a coating, the coating exhibits a stain rating for wine of at least 5, as measured according to the Stain Resistance Test Method.

### EXAMPLES

Illustrating the invention are the following examples that are not to be considered as limiting the invention to their details. All parts and percentages in the examples, as well as throughout the specification, are by weight unless otherwise indicated.

The following test methods were used in the Examples to report the stain resistance and dirt pickup resistance data. Any stain resistance or dirt pickup resistance discussion in this disclosure is associated with these test methods.
**I. Stain Resistance Test Method:** The stain resistance test method is a more challenging, modified version of ASTM D4828 to target stain removal using fewer scrub cycles. Films were prepared by drawing down the coating composition onto black Leneta scrub panels (Form P121-10N) using a 7-mil horseshoe drawdown bar. The films were dried at ambient laboratory conditions for 7 days before stain application. Before applying stains, color was measured of the unstained coated panel using a Datacolor 850 spectrophotometer using 9mm size aperture. The following stains were applied to the paint films via one-inch strips of filter paper saturated with the following fluids: red wine (Holland House red cooking wine), grape juice (Welch's grape juice), java concentrate (Pur Java concentrate- Honduran Dark Roast), and hot coffee (Kirkland Signature 100% Colombian (Dark Roast-fine grind)) (70°C). The following stains were directly applied to the paint films: mustard (French's mustard), red lipstick (CoverGirl 305 "Hot" lipstick), green crayon (Crayola), graphite powder (Alfa Aesar graphite - 99.9% pure), and Leneta staining medium (ST-1). After 30 minutes, the lipstick and Leneta medium were wiped off, and the paint films were rinsed and placed in a washability machine (Gardner Abrasion Tester). A damp cellulosic sponge containing 10 g of water and 6 g of SOFT SCRUB (cleanser, Henkel Corporation (Düsseldorf, Germany)) was placed in a 1000 g holder, and the panels were scrubbed for 6 cycles. After rinsing the panels and drying for at least 2 hours, color was again measured for the coated panels using the spectrophotometer so that a ΔE color change for each coated panel could be obtained. Each of the 9 stains was rated on an integer scale of 0 for no stain removal to 10 for complete stain removal based on the measured ΔE color change of the coated panel using the following Table 1:

**Table 1**

| Delta E Color Change | | | | | | | | | |
|---|---|---|---|---|---|---|---|---|---|
| Rating | Red Wine | Grape Juice | Java Concentrate | Hot Coffee | Mustard | Lipstick | Green Crayon | Graphite | Lenata Oil |
| 0 | >6.30 | >6.00 | >4.00 | >6.00 | >25.00 | >32.00 | >12.20 | >26.50 | >22.00 |
| 1 | 5.69-6.30 | 5.07-6.00 | 3.62-4.00 | 5.33-6.00 | 22.29-25.00 | 27.32-32.00 | 10.91-12.20 | 22.01-26.50 | 18.51-22.00 |
| 2 | 5.11-5.68 | 4.50-5.06 | 3.23-3.61 | 4.73-5.32 | 19.58-22.28 | 22.63-27.31 | 9.61-10.90 | 17.68-22.00 | 16.01-18.50 |
| 3 | 4.53-5.10 | 3.93-4.49 | 2.84-3.22 | 4.12-4.72 | 16.85-19.57 | 18.01-22.62 | 8.31-9.60 | 14.96-17.67 | 13.50-16.00 |
| 4 | 3.39-4.52 | 3.36-3.92 | 2.45-2.83 | 3.52-4.11 | 12.24-16.84 | 14.51-18.00 | 7.01-8.30 | 12.24-14.95 | 11.01-13.49 |
| 5 | 2.81-3.38 | 2.79-3.35 | 2.07-2.44 | 2.92-3.51 | 9.52-12.23 | 11.01-14.50 | 5.70-7.00 | 9.52-12.23 | 8.51-11.00 |
| 6 | 2.23-2.80 | 2.22-2.78 | 1.68-2.06 | 2.32-2.91 | 6.80-9.51 | 7.51-11.00 | 4.41-5.69 | 6.80-9.51 | 6.01-8.50 |
| 7 | 1.66-2.22 | 1.65-2.21 | 1.29-1.67 | 1.71-2.31 | 4.25-6.79 | 4.51-7.50 | 3.11-4.40 | 4.25-6.79 | 3.81-6.00 |
| 8 | 1.09-1.65 | 1.08-1.64 | 0.90-1.28 | 1.11-1.70 | 1.91-4.24 | 1.91-4.50 | 1.81-3.10 | 1.91-4.24 | 1.91-3.80 |
| 9 | 0.50-1.08 | 0.50-1.07 | 0.50-0.89 | 0.51-1.10 | 0.57-1.90 | 0.51-1.90 | 0.51-1.80 | 0.51-1.90 | 0.51-1.90 |
| 10 | <0.50 | <0.50 | <0.50 | <0.50 | <0.56 | <0.50 | <0.50 | <0.50 | <0.50 |

A stain rating ranging from 0 to 90 was obtained by summing the rating for each individual stain.
**II. Dirt Pickup Resistance Test:** A coating composition was brushed onto an aluminum substrate and air dried for 5 days at ambient conditions. Colorimetric values for the coated substrates were measured and stored using a MacBeth Color-eye Spectrophotometer.

The substrates were tested for dirt pickup resistance by applying a uniform coating of Mapico Iron Oxide slurry to the substrates. The Mapico Iron Oxide slurry was prepared using 250 grams of tap water, 2 drops of TAMOL 731 surfactant (commercially available from Rohm and Haas Company (Philadelphia, PA)), and 125 grams of Mapico 641 Iron Oxide Brown (commercially available from Rockwood Pigments (Beltsville, MD)) stirred using a Cowles mixer for 15 minutes on high speed. The substrates coated with Mapico Iron Oxide slurry were left to dry at normal lab conditions for 4 hours. The substrates coated with the Mapico Iron Oxide slurry were washed with warm water and DAWN PROFESSIONAL Manual Pot and Pan Detergent dishwashing soap (available from Proctor and Gamble (Cincinnati, OH)) by rubbing with a wet soapy cheese cloth pad until no more stain can be removed. The DAWN PROFESSIONAL Manual Pot and Pan Detergent dishwashing soap is reported on the bottle as containing (CAS #): water (7732-18-5), sodium alkyl sulfate (68585-47-7), ethanol (64-17-5), sodium alkyl ethoxylate sulfate (68585-34-2), and amine oxide (70592-80-2). The washed substrates were then rinsed and left to dry. Colorimetric values were again taken for the substrates using the MacBeth Color-eye Spectrophotometer, and a ΔE value between the coated substrate before the test and the same coated substrate having undergone the dirt pickup test as described above was determined.

### EXAMPLE 1

### Core-Shell Acrylic

A four-neck round bottom flask (equipped with mechanical stirrer, temperature probe, reflux condenser, two addition funnels and a nitrogen inlet) was charged with 125.7 g of DOWANOL PM, available from Dow Chemical Company (Midland, MI). The contents of the flask were heated to reflux (118°C) and an initiator solution (composed of 76.5 g of DOWANOL PM and 16.34 g of VAZO 67, available from The Chemours Company (Wilmington, DE)) was added over 210 minutes. Five minutes after the start of the initiator solution feed, a shell monomer mixture (composed of 34.5 g of acrylic acid, 217.3 g of methyl methacrylate, and 157.4 g of n-butyl acrylate) was added over 180 minutes. Each of the feeds was rinsed into the reactor with 8.6 g of DOWANOL PM, and the reaction mixture was allowed to stir at reflux (120-122°C) for 2 hours after the initiator solution feed ended. The reaction mixture was allowed to cool to less than 60°C, and a core monomer mixture (composed of 158.1 g of 2-hydroxyethyl methacrylate, 276.6 g of methyl methacrylate, and 356.0 g of n-butyl acrylate) was added. As the reaction mixture was allowed to cool to 30°C, 32.26 g of N,N-dimethylethanolamine was added over 10 minutes.

A second four-neck round bottom flask (equipped with mechanical stirrer, temperature probe, reflux condenser, and a nitrogen sparge tube) was charged with 1771.1 g of deionized water and sparged with nitrogen for 1 hour. A solution of 0.026 g of ferrous ammonium sulfate in 17.8 g of nitrogen sparged deionized water was added, and then the contents of the first flask were added to the second flask. After stirring for 15 minutes, a solution of 1.826 g of isoascorbic acid in 47.7 g of nitrogen sparged deionized water was added over 5 minutes. After stirring for 10 minutes, a mixture of 2.584 g of 35% aqueous hydrogen peroxide and 191.2 g of nitrogen sparged deionized water was added over 15 minutes. After the exothermic reaction peaked at 64°C, the product was allowed to cool to room temperature before pouring out. The total non-volatiles of the product were measured at 34.62%, and the pH was 7.82 (measured with an ACCUMET AR20 pH/conductivity meter using an ACCUMET 13-620-288 electrode). Non-volatile content (solids) was measured by comparing initial sample weights to sample weights after exposure to 110°C for 1 hour. The z-average particle size measured by dynamic light scattering (DLS) with a Malvern Zetasizer Nano ZS was 56.86 nm and the polydispersity index was 0.077. The PDI is a standard output from the Malvern Zetasizer Nano ZS in addition to the z-average particle size.

### EXAMPLE 2

### Core-Shell Acrylic

A core-shell acrylic was prepared in the same manner as Example 1 above, with the following exceptions: The shell monomer mixture was composed of 34.5 g of acrylic acid, 171.1 g of methyl methacrylate, 142.6 g of n-butyl acrylate, and 61.0 g of gamma-methacryloxypropyltrimethoxysilane (SILQUEST A-174NT available from Momentive Performance Materials, Inc. (Waterford, NY)), and the core monomer mixture was composed of 387.4 g of methyl methacrylate, and 387.4 g of n-butyl acrylate. The total non-volatiles of the product were measured at 33.76% (110°C, 60 minutes), and the pH was 7.85. The z-average particle size measured with a Malvern Zetasizer Nano ZS was 58.75nm and the polydispersity index was 0.117.

### EXAMPLE 3

### Core-Shell Acrylic

A core-shell acrylic was prepared in the same manner as Example 1 above, with the following exceptions: The shell monomer mixture was composed of 34.5 g of acrylic acid, 171.1 g of methyl methacrylate, 142.6 g of n-butyl acrylate, and 61.0 g of gamma-methacryloxypropyltrimethoxysilane (SILQUEST A-174NT), and the core monomer mixture was composed of 379.7 g of methyl methacrylate, 7.75 g of methacrylic acid, and 387.4 g of n-butyl acrylate. The total non-volatiles of the product were measured at 33.82% (110°C, 60 minutes), and the pH was 7.56. The z-average particle size measured with a Malvern Zetasizer Nano ZS was 164.3 nm and the polydispersity index was 0.208.

### EXAMPLES 4-6

### Coating Compositions

Coating compositions were prepared according to the Base Formulation in Table 2 with different resin blends, keeping the total resin solids constant by weight. The grind ingredients were mixed using a high-speed Cowles disperser at sufficient speed to create a vortex where the blade meets the paint. After addition of the matting agent, the grind process resumed for 20 minutes, followed by adding the letdown ingredients using a conventional lab mixer and mixing for 30 minutes after the last addition.

**Table 2**

| **Item** | **Amount (g)** |
|---|---|
| Grind | |
| Water | 100.0 |
| PANGEL S9¹ | 3.0 |
| TYLOSE HX 6000² YG4 | 2.0 |
| DREWPLUS T-4507³ | 2.0 |
| TAMOL 731A⁴ | 5.0 |
| ZETASPERSE 179⁵ | 6.0 |
| MINEX 4⁶ | 92.0 |

| Letdown | |
|---|---|
| Water | 71.0 |
| ACRYSOL RM-2020 NPR⁷ | 17.0 |
| TRONOX CR-826S⁸ | 387.0 |
| DREWPLUS T-4507³ | 8.0 |
| Resin blend | 430.0 |
| OPTIFILM enhancer 400⁹ | 15.0 |
| ACTICIDE MBS¹⁰ | 1.2 |

| | |
|---|---|
| ¹Magnesium silicate rheology modifier, available from The Carey Company (Addison, IL) ²Hydroxyethylcellulose rheology modifier, available from SETylose USA (Plaquemine, LA) ³Mineral oil defoamer, available from Ashland (Columbus, OH) ⁴Dispersant available from The Dow Chemical Company (Midland, MI) ⁵Nonionic surfactant, available from Evonik Industries AG (Essen, Germany) ⁶Aluminum silicate matting agent, available from The Cary Company (Addison, IL) ⁷Hydrophobically modified ethylene oxide urethane rheology modifier, available from The Dow Chemical Company (Midland, MI) ⁸Rutile titanium dioxide slurry, available from Tronox Limited (Stamford, CT) ⁹Coalescent, available from The Eastman Chemical Company (Kingsport, TN) ¹⁰Biocide, available from Thor Specialties, Inc. (Shelton, CT) | |

The core-shell acrylics in Examples 1-3 were blended at 30 wt% based on total resin solids with an acrylic latex, RHOPLEX SG-30, available from The Dow Chemical Company (Midland, MI), in the Base Formulation. Examples 4 and 5 in Table 3 contain the core-shell acrylic resins of Examples 1 and 2, respectively, with z-average particle size smaller than RHOPLEX SG-30, which is 150 nm as measured with a Malvern Zetasizer Nano ZS. The stain resistances of Examples 4 and 5 are over 34% higher than that of Example 6, which contains a core-shell acrylic resin of Example 3 with z-average particle size larger than RHOPLEX SG-30. This indicates that Examples 4 and 5 are overall relatively more stain resistant when considering a range of both hydrophobic and hydrophilic stains.

**Table 3**

| | **Ex. 4** | **Ex. 5** | **Ex. 6** |
|---|---|---|---|
| | Ex. 1 blend | Ex. 2 blend | Ex. 3 blend |
| **Stain** | | | |
| Wine | 5 | 8 | 3 |
| Grape Juice | 6 | 7 | 2 |
| Java Concentrate | 2 | 3 | 1 |
| Hot Coffee | 5 | 3 | 1 |
| Mustard | 0 | 1 | 1 |
| Lipstick | 7 | 4 | 3 |
| Green Crayon | 10 | 10 | 10 |
| Graphite | 9 | 8 | 9 |
| Leneta Oil | 7 | 7 | 8 |
| Total | 51 | 51 | 38 |

### EXAMPLE 7

### Synthesis of Polyurethane-Acrylic resin using polyester polyol having a 6 or more consecutive methylene group chain

The polyurethane was prepared by charging the following components in order into a kettle reactor fitted with baffles, thermocouple, mechanical stirrer, and condenser: 136.2 g of methyl methacrylate (MMA), 81.6 g of butyl acrylate (BA), 200 g of FOMREZ 66-112 polyester polyol having a 6 or more consecutive methylene group chain (which had an experimentally defined Hansen Solubility Parameter space of [δ_{d} = 17.1, δₚ = 9.4, δₕ =9.9], R=11.7 according to the Hansen Solubility Method), available from Chemtura (Philadelphia, PA), 30.5 g of dimethylolpropionic acid (DMPA), 4.1g of hydroxyethyl methacrylate (HEMA), 1.2 g of triethylamine (TEA), and 0.38 g of butylated hydroxytoluene (Ionol12). The mixture was heated to 55°C and held for 15 minutes. Next, 121.5 g of isophorone diisocyanate (IPDI) was charged into the reactor over 20 minutes. The isocyanate-adding funnel was rinsed with 20.4 g of BA. The temperature of the reaction mixture was held at 80°C until the theoretical NCO equivalent weight was reached, then the reaction temperature was lowered to 65°C and 8.95 g of TEA were added and held for 15 minutes.

A second Kettle reactor fitted with baffles, thermocouple, mechanical stirrer, and condenser was charged with 810 g of deionized water, 2.9 g of dimethylethanolamine (DMEA), and 4.7 g of ethylenediamine (EDA) and heated to 40°C. 90% of the contents of the first Kettle reactor were added to the second Kettle reactor over a 10 minute period. The mixture was cooled to 40°C and a nitrogen atmosphere was established and maintained in the reactor for the remainder of the reaction. 34.4 g of diacetone acrylamide were dissolved in 90 g and 0.57 g of water and 0.5 g of t-butyl hydroperoxide (70%) in 9.0 g of water were added to the reactor and held for 15 minutes at 40°C, then followed by a 30 minute addition of a dissolution of 0.5 g of sodium metabisulfite and 0.01 g of ferrous ammonium sulfate in 67.5 g of water. The temperature rose exothermically to 60-65°C. When the temperature started to decrease the set point of the reaction was changed to 60°C and held for 30 min. The mixture was cooled to 30°C. The final product had a measured solids of 36.7% (measured for 60 minutes at 110°C), Brookfield viscosity of 237 CPS, pH of 7.45. Brookfield viscosity was measured at 25°C on a Brookfield Viscometer DV-II+Pro using spindle #3 at 100 RPM.

### EXAMPLE 8

### Synthesis of Polyurethane-Acrylic resin using substituted polyol

The polyurethane was prepared by charging the following components in order into a kettle reactor fitted with baffles, thermocouple, mechanical stirrer, and condenser: 136.2 g of methyl methacrylate (MMA), 81.6 g of butyl acrylate (BA), 200 g of FOMREZ 55-112 substituted polyester polyol (which had an experimentally defined Hansen Solubility Parameter space of [δ_{d} = 13.3, δₚ = 11.4, δₕ =5.6], R=14.6 according to the Hansen Solubility Method), available from Chemtura (Philadelphia, PA), 30.5 g of dimethylolpropionic acid (DMPA), 4.1g of hydroxyethyl methacrylate (HEMA), 1.2 g of triethylamine (TEA), and 0.38 g of butylated hydroxytoluene (Ionol12). The mixture was heated to 55°C and held for 15 minutes. Next, 121.5 g of isophorone diisocyanate (IPDI) was charged into the reactor over 20 minutes. The isocyanate-adding funnel was rinsed with 20.4 g of BA. The temperature of the reaction mixture was held at 80°C until the theoretical NCO equivalent weight was reached, then the reaction temperature was lowered to 65°C and 8.95 g of TEA were added and held for 15 minutes.

A second Kettle reactor fitted with baffles, thermocouple, mechanical stirrer, and condenser was charged with 810 g of deionized water, 2.9 g of dimethylethanolamine (DMEA), and 4.7 g of ethylenediamine (EDA) and heated to 40°C. 90% of the contents of the first Kettle reactor were added to the second Kettle reactor over a 10 minute period. The mixture was cooled to 40°C and a nitrogen atmosphere was established and maintained in the reactor for the remainder of the reaction. 34.4 g of diacetone acrylamide were dissolved in 90 g and 0.57 g of water and 0.5 g of t-butyl hydroperoxide (70%) in 9.0 g of water were added to the reactor and held for 15 minutes at 40°C, then followed by a 30 minute addition of a dissolution of 0.5 g of sodium metabisulfite and 0.01 g of ferrous ammonium sulfate in 67.5 g of water. The temperature rose exothermically to 60-65°C. When the temperature started to decrease the set point of the reaction was changed to 60°C and held for 30 min. The mixture was cooled to 30°C. The final product had a measured solids of 37.01% (measured for 60 minutes at 110°C), Brookfield viscosity of 1660 CPS, pH of 7.82.

### EXAMPLE 9

### Synthesis of Polyurethane-Acrylic resin using cyclic substituted polyol

The polyurethane was prepared by charging the following components in order into a kettle reactor fitted with baffles, thermocouple, mechanical stirrer, and condenser: 136.2 g of methyl methacrylate (MMA), 81.6 g of butyl acrylate (BA), 200 g of a cyclic-substituted polyester polyol (synthetized by condensing by weight 36.99% neopentyl glycol hydroxy pivalate, 16.26% 2-methyl-1,3-propanediol, 46.74% 1,4-cyclohexanedicarboxylic acid at 220°C, which had an experimentally defined Hansen Solubility Parameter space of [δ_{d} = 13.3, δₚ = 11.5, δₕ = 5.5], R=14.7 according to the Hansen Solubility Method), 30.5 g of dimethylolpropionic acid (DMPA), 4.1g of hydroxyethyl methacrylate (HEMA), 1.2 g of triethylamine (TEA), and 0.38 g of butylated hydroxytoluene (Ionol12). The mixture was heated to 55°C and held for 15 minutes. Next, 121.5 g of isophorone diisocyanate (IPDI) was charged into the reactor over 20 minutes. The isocyanate-adding funnel was rinsed with 20.4 g of BA. The temperature of the reaction mixture was held at 80°C until the theoretical NCO equivalent weight was reached, then the reaction temperature was lowered to 65°C and 8.95 g of TEA were added and held for 15 minutes.

A second Kettle reactor fitted with baffles, thermocouple, mechanical stirrer, and condenser was charged with 810 g of deionized water, 2.9 g of dimethylethanolamine (DMEA), and 4.7 g of ethylenediamine (EDA) and heated to 40°C. 90% of the contents of the first Kettle reactor were added to the second Kettle reactor over a 10 minute period. The mixture was cooled to 40°C and a nitrogen atmosphere was established and maintained in the reactor for the remainder of the reaction. 34.4 g of diacetone acrylamide were dissolved in 90 g and 0.57 g of water and 0.5 g of t-butyl hydroperoxide (70%) in 9.0 g of water were added to the reactor and held for 15 minutes at 40°C, then followed by a 30 minute addition of a dissolution of 0.5 g of sodium metabisulfite and 0.01 g of ferrous ammonium sulfate in 67.5 g of water. The temperature rose exothermically to 60-65°C. When the temperature started to decrease the set point of the reaction was changed to 60°C and held for 30 min. The mixture was cooled to 30°C. The final product had a measured solids of 40.1% (measured for 60 minutes at 110°C), Brookfield viscosity of 755 CPS, pH of 7.2.

### EXAMPLE 10

### Synthesis of Polyurethane-Acrylic resin using cyclic substituted polyol and polycarbonate

The polyurethane was prepared by charging the following components in order into a kettle reactor fitted with baffles, thermocouple, mechanical stirrer, and condenser: 136.2 g of methyl methacrylate (MMA), 81.6 g of butyl acrylate (BA), 150 g of a cyclic-substituted polyester polyol (synthetized by condensing by weight 36.99% neopentyl glycol hydroxy pivalate, 16.26% 2-methyl-1,3-propanediol, 46.74% 1,4-cyclohexanedicarboxylic acid at 220°C, which had an experimentally defined Hansen Solubility Parameter space of [δ_{d} = 13.3, δₚ = 11.5, δₕ = 5.5], R=14.7 according to the Hansen Solubility Method)), 50 g of OXYMER HD112 aliphatic polycarbonate diol, 30.5 g of dimethylolpropionic acid (DMPA), 4.1g of hydroxyethyl methacrylate (HEMA), 1.2 g of triethylamine (TEA), and 0.38 g of butylated hydroxytoluene (Ionol12). The mixture was heated to 55°C and held for 15 minutes. Next, 121.5 g of isophorone diisocyanate (IPDI) was charged into the reactor over 20 minutes. The isocyanate-adding funnel was rinsed with 20.4 g of BA. The temperature of the reaction mixture was held at 80°C until the theoretical NCO equivalent weight was reached, then the reaction temperature was lowered to 65°C and 8.95 g of TEA were added and held for 15 minutes.

A second Kettle reactor fitted with baffles, thermocouple, mechanical stirrer, and condenser was charged with 810 g of deionized water, 2.9 g of dimethylethanolamine (DMEA) and 4.7 g of ethylenediamine (EDA) and heated to 40°C. 90% of the contents of the first Kettle reactor were added to the second Kettle reactor over a 10 minute period. The mixture was cooled to 40°C and a nitrogen atmosphere was established and maintained in the reactor for the remainder of the reaction. 34.4 g of diacetone acrylamide were dissolved in 90 g and 0.57 g of water and 0.5 g of t-butyl hydroperoxide (70%) in 9.0 g of water were added to the reactor and held for 15 minutes at 40°C, then followed by a 30 minute addition of a dissolution of 0.5 g of sodium metabisulfite and 0.01 g of ferrous ammonium sulfate in 67.5 g of water. The temperature rose exothermically to 60-65°C. When the temperature started to decrease the set point of the reaction was changed to 60°C and held for 30 min. The mixture was cooled to 30°C. The final product had a measured solids of 35.7% (measured for 60 minutes at 110°C), Brookfield viscosity of 772 CPS, pH of 7.2.

### EXAMPLES 11-15

### Polyurethane-Acrylic Core-Shell Coating Compositions

The polyurethane-acrylic core-shell resins in Examples 7-10 were used as 100% of the resin solids in Examples 11-14, respectively. Each resin was added to the same base formula (Table 2) and was processed the same as the coating compositions in Examples 4-6. RHOPLEX SG-30 was used as at 100% resin loading as a negative control (Example 15) in the same base formula following the same process. Seen below in Table 4, stain resistances of Example 13 is the best for stain resistance, with a score 37% better than the Acrylic Control (Example 15) and 28% better than the resin in Example 11. It can be seen that the all linear, un-substituted polyurethane composition in Example 11 is the worst for stain resistance (except for the control Example 15). Example 12 which has alkyl substitution along the polyurethane backbone and Example 14, which has cyclic content, show an improvement in stain resistance over Example 11. There is a significant increase in stain resistance when cyclic content and alkyl substitution are combined along the polyurethane backbone, seen in Example 13. Example 14 shows that the presence of polycarbonate linkages in combination with the cyclic and substituted polyester polyol result in an improved stain resistance as well. This indicates that Examples 12-14 are overall relatively more stain resistant when considering a range of both hydrophobic and hydrophilic stains.

**Table 4**

| | **Ex. 11** | **Ex. 12** | **Ex. 13** | **Ex. 14** | **Ex. 15** |
|---|---|---|---|---|---|
| **Resin** | Ex. Resin 7 | Ex. Resin 8 | Ex. Resin 9 | Ex. Resin 10 | Acrylic Control |
| **Stain** | | | | | |
| Wine | 7 | 7 | 8 | 8 | 7 |
| Grape Juice | 7 | 7 | 9 | 9 | 4 |
| Java Concentrate | 3 | 2 | 4 | 4 | 2 |
| Hot Coffee | 4 | 3 | 4 | 3 | 3 |
| Mustard | 2 | 1 | 3 | 1 | 1 |
| Lipstick | 6 | 8 | 9 | 8 | 5 |
| Green Crayon | 8 | 9 | 9 | 10 | 8 |
| Graphite | 7 | 9 | 9 | 9 | 8 |
| Leneta Oil | 2 | 2 | 4 | 4 | 5 |
| Total | 46 | 48 | 59 | 56 | 43 |

The Dirt Pickup Resistance Test results can be found in Table 5 for Examples 11-15. The results show that the best polyurethane-acrylic composition is Example 14 followed by Example 13, with lower ΔE being better. Cyclic content clearly improved dirt pick-up resistance and polycarbonate linkages cause an even greater improvement when combined with substituted and cyclic polyurethane chains.

**Table 5**

| | **Ex. 11** | **Ex. 12** | **Ex. 13** | **Ex. 14** | **Ex. 15** |
|---|---|---|---|---|---|
| **Resin** | Ex. Resin 7 | Ex. Resin 8 | Ex. Resin 9 | Ex. Resin 10 | Acrylic Control |
| ΔE | 14.23 | 13.45 | 5.81 | 3.33 | 15.49 |

### EXAMPLES 16-18

### Polyurethane-Acrylic Core-Shell Coating Compositions

The core-shell acrylics in Examples 7-9 were blended at 30 wt% based on total resin solids with an acrylic latex, RHOPLEX SG-30, available from The Dow Chemical Company (Midland, MI), in the base formulation from Table 2. Example 15 with 100% RHOPLEX SG-30 scores in Tables 4 and 5 can be used as a control reference for this example set as well. Seen below in Table 6, the best overall stain resistance comes from Example 18 including the resin from Example 9, and the worst stain resistance of the polyurethane-acrylic core-shell resins comes from the linear polyurethane from Example 16. Adding some substitution, seen in Example 17, improves stain performance. The largest increase in stain resistance comes from the combination of cyclic and substituted content (*see* Example 18). This indicates that Examples 17 and 18 are overall relatively more stain resistant when considering a range of both hydrophobic and hydrophilic stains.

**Table 6**

| | **Ex. 16** | **Ex. 17** | **Ex. 18** |
|---|---|---|---|
| **Resin** | Ex. Resin 7 | Ex. Resin 8 | Ex. Resin 9 |
| **Stain** | | | |
| Wine | 7 | 7 | 7 |
| Grape Juice | 7 | 6 | 7 |
| Java Concentrate | 3 | 4 | 4 |
| Hot Coffee | 5 | 5 | 5 |
| Mustard | 1 | 1 | 2 |
| Lipstick | 6 | 7 | 8 |
| Green Crayon | 9 | 9 | 9 |
| Graphite | 7 | 8 | 8 |
| Leneta Oil | 2 | 3 | 4 |
| **Total** | **47** | **50** | **54** |

The Dirt Pickup Resistance Test results can be found in Table 7 for Examples 16-18. The results show that the best polyurethane-acrylic composition is Example 18 when blended with RHOPLEX SG-30 acrylic.

**Table 7**

| | **Ex. 16** | **Ex. 17** | **Ex. 18** |
|---|---|---|---|
| **Resin** | Ex. Resin 7 | Ex. Resin 8 | Ex. Resin 9 |
| ΔE | 16.49 | 17.85 | 11.81 |

Whereas particular aspects of this invention have been described above for purposes of illustration, it will be evident to those skilled in the art that numerous variations of the details of the present invention may be made without departing from the invention as defined in the appended claims.

## Claims

1. A stain resistant coating composition comprising:
urethane acrylate core-shell particles comprising (1) a polymeric acrylic core; and (2) a polymeric shell comprising a urethane linkage, wherein the polymeric shell is formed from a reaction mixture comprising an isocyanate and a polyol, wherein:
(a) the polyol is substantially free of a six or more consecutive methylene group chain, wherein substantially free of a six or more consecutive methylene group chain means that less than 5 wt% of the polyol monomers reacted with the isocyanate to form the polyurethane polymeric shell contain a six or more consecutive methylene group chain; and/or
(b) the polyol is formed from monomers comprising a monomer content including at least 10 wt% substituted polyol and/or substituted polyacid, based on the total weight of the monomers forming the polyol;
wherein the polyol comprises a polyester polyol and/or a polycarbonate polyol;
wherein the polyester polyol is prepared from a reaction mixture comprising: 2-methyl-1,3-propanediol, 1,4-cyclohexane dicarboxylic acid, and hydroxypivalyl hydroxypivalate glycol.

2. The coating composition of claim 1, further comprising a second resin comprising an acrylic resin, poly(vinyl acetate), a vinyl acetate-ethylene copolymer, or mixtures thereof.

3. The coating composition of claim 1 or 2, wherein the polyol comprises a plurality of pendant alkyl groups.

4. The coating composition of any of claims 1-3, wherein the polyester polyol and/or the polycarbonate polyol are formed from monomers comprising a monomer content including at least 35 wt% substituted polyol and/or substituted polyacid and/or at least 35 wt% polyol or polyacid containing cyclic content, based on the total weight of the monomers forming the polyol.

5. The coating composition of any of claims 1-4, wherein the urethane acrylate core-shell particles have at least one measurable Tg of from -50°C to 100°C, measured by differential scanning calorimetry according to ASTM D3418-15; wherein a volatile organic content (VOC) of the coating composition is less than 50 g/L.

6. The coating composition of any of claims 2-5, wherein the second resin comprises acrylic resin particles having a Mw of at least 100,000, determined according to the method identified in the specification; and/or
wherein the second resin comprises acrylic resin particles having a z-average particle size at least 10% greater than the urethane acrylate core-shell particles, as measured according to the Particle Size Test Method identified in the specification; and/or
wherein the second resin comprises acrylic resin particles, wherein the urethane acrylate core-shell particles have a z-average particle size smaller than the acrylic resin particles, as measured according to the Particle Size Test Method identified in the specification.

7. A substrate at least partially coated with a coating formed from the coating composition of any of claims 1-6.

8. The substrate of claim 7, wherein the substrate comprises an architectural component.

9. The stain resistant coating composition of any of claims 1-6,
wherein when the coating composition is applied to a substrate and coalesced to form a coating, the coating exhibits a stain rating of at least 45, as measured according to the Stain Resistance Test Method identified in the specification.

10. The coating composition of claim 9, wherein the polyol has a calculated Hansen Solubility Parameter space at least partially overlapping a Hansen Solubility Parameter space defined by [δ_{d} = 13.3, δₚ = 11.5, δₕ = 5.5], R= 14.7.

11. The coating composition of claim 9 or 10, wherein when the coating composition is applied to the substrate and coalesced to form the coating, the coating exhibits a dirt pickup resistance having a ΔE less than 20, as measured according to the Dirt Pickup Resistance Test Method identified in the specification.

12. The coating composition of any of claims 1-6 and 9-11, wherein when the coating composition is applied to a substrate and coalesced to form a coating, the coating exhibits a stain rating for grape juice of at least 6, as measured according to the Stain Resistance Test Method identified in the specification; and/or. wherein when the coating composition is applied to a substrate and coalesced to form a coating, the coating exhibits a stain rating for lipstick of at least 6, as measured according to the Stain Resistance Test Method identified in the specification.

13. A stain resistant coating composition comprising:
(i) acrylic core-shell particles having a z-average particle size of up to 100 nm, wherein the acrylic core-shell particles comprise urethane acrylate core-shell particles of any one of claims 1 to 6; and
(ii) non-core-shell acrylic resin particles,
wherein the acrylic core-shell particles have a z-average particle size smaller than the non-core-shell acrylic resin particles, wherein z-average particle size is measured according to the Particle Size Test Method.

14. The coating composition of claim 13, wherein the non-core-shell acrylic resin particles have a z-average particle size at least 10% greater than the acrylic core-shell particles, as measured according to the Particle Size Test Method identified in the specification.

15. The coating composition of any of claims 13-14, wherein when the coating composition is applied to a substrate and coalesced to form a coating, the coating exhibits a stain rating for grape juice of at least 6, as measured according to the Stain Resistance Test Method identified in the specification; and/or
wherein when the coating composition is applied to a substrate and coalesced to form a coating, the coating exhibits a stain rating for lipstick of at least 4, as measured according to the Stain Resistance Test Method identified in the specification; and/or
wherein when the coating composition is applied to a substrate and coalesced to form a coating, the coating exhibits a stain rating for coffee of at least 3, as measured according to the Stain Resistance Test Method identified in the specification; and/or
wherein when the coating composition is applied to a substrate and coalesced to form a coating, the coating exhibits a stain rating for wine of at least 5, as measured according to the Stain Resistance Test Method identified in the specification.
